# EUROPEAN PATENT SPECIFICATION

(11) **EP 1 192 823 B1**
(45) Date of publication and mention of the grant of the patent: **20.04.2011**
(21) Application number: 00941946.6
(22) Date of filing: 04.07.2000
(51) Int. Cl.: H04W 88/02

(54) **A METHOD OF TRANSMITTING DATA ITEMS TO A NUMBER OF MOBILE STATIONS, A MOBILE STATION, AND A STORAGE MODULE**
VERFAHREN ZUR ÜBERTRAGUNG VON DATEN AN MEHRERE BEWEGLICHE STATIONEN, BEWEGLICHE STATION UND SPEICHERMODUL
PROCEDE DE TRANSMISSION D'ARTICLES DE DONNEES A UN CERTAIN NOMBRE DE STATIONS MOBILES, STATION MOBILE, ET MODULE DE STOCKAGE

(30) Priority: 05.07.1999 DK 99973; 05.10.1999 DK 991425
(43) Date of publication of application: 03.04.2002
(73) Proprietor: TeleCommunication Systems, Inc., Annapolis, MD 21401 (US)
(72) Inventor: KROLL, Bo, London W9 1AU (GB)
(74) Representative: Boesen, Johnny Peder
(86) International application number: PCT/DK2000/000363
(87) International publication number: WO 2001/003455

(56) References cited:
- EP-A1- 0 562 890
- WO-A2-97/32439

## Description

The invention relates to a method of transmitting data items from a service provider through at least one base station to a large number of mobile stations, a mobile station comprising a storage module for storing data items, a display for presenting data items to a user, and a user interface for receiving requests from a user, the method comprising the steps of broadcasting said data items through the at least one base station, receiving said data items in the mobile station, storing received data items in the storage module for subsequent presentation on the display, and receiving from said user interface a request for presentation of a specific data item. Further the invention relates to a mobile station for receiving such data items, and a storage module for use in such a mobile station.

Although mobile terminals, such as e.g. pagers and cellular telephones, are mostly used for two-way communication between a base station and each of a number of mobile terminals, it is also well known to transmit identical information to a large number of mobile terminals simultaneously. Examples of such information could be football results or other sports scores sent during an ongoing game, financial information such as stock exchange rates, weather reports, traffic information and airline schedules. The information is transmitted as text messages to the mobile terminal and displayed to the user of the terminal. Such services are often referred to as Value Added Services.

For years such services have been used in connection with pagers, but pagers have the disadvantage that, normally, a subscriber to a Value Added Service must buy a pager dedicated to this purpose only, which makes the initial costs high. It is also known to use mobile telephones, such as GSM phones, for this purpose, in which case it is possible to use a terminal which is already used by the subscriber for normal two-way telephone communication. This reduces the initial costs considerably.

Current generations of GSM and CDMA phones all incorporate a mutually compatible storage module in the form of a SIM card (Subscriber Identity Module). The original design purpose of the SIM card is to handle the user authentication process on behalf of the network operator and the end-user to ensure correct billing and provide comprehensive safeguards against misuse for both parties. Therefore, SIM cards incorporate a number of functions to handle these tasks. Although some of these SIM card functionalities may also be used for the provision of Value Added Services, this was never originally envisioned, and, therefore, these functionalities are not always well suited, or comprehensive enough, for this purpose.

A general problem with a storage module such as a SIM card is that the memory capacity of the module is too limited to support value added services on mobile phones. Even state of the art SIM cards have a total memory of only 32 kbytes and approximately 8 kbytes thereof are reserved for various standard functionalities, leaving only approximately 24 kbytes for the value added services. Many value added services, e.g. financial information services, which update a large stock exchange or the equity options markets, require memory capacity in excess of these figures. Often the requirement will be 1-5 Mbytes. This forces the value added service providers to limit the scope and quality, and hence the value, of their services, if they want to offer the service to users of mobile telephones. In situations where the end-user requires access to more than one value added service, which will often be the case, this problem is even further compounded.

WO 97/32439 shows a communication network terminal supporting a plurality of different applications. User messages, such as SMS (Short Message Service) messages, can be sent to anyone of the applications in the terminal. The messages are provided with a header defining the relevant application. In a menu application, menus may be created in the terminal according to received user messages and then stored in a memory in the terminal. This menu structure may be updated by transmitting further user messages to the terminal.

WO 98/11746 discloses a data store, such as a SIM card for a mobile GSM station, in which data items are stored in a compressed format in the SIM memory, thereby providing a certain increase in the perceived storage capacity of the SIM. The amount of data items that can be stored in the memory can be increased by over 50%, but this is far from being enough to solve the above-mentioned problem.

Thus, it is an object of the invention to provide a method of transmitting data items to a large number of mobile stations in which a storage module having a limited memory capacity can be used in a mobile station without limiting the scope and quality of value added services.

According to the invention, this is achieved in that the method further comprises the steps of storing only a group of data items comprising some of the received data items in the storage module; reading, if the requested data item belongs to said group, the data item from the storage module, and presenting it on the display; and receiving, if the requested data item does not belong to said group, the data item through said broadcast, storing it in the storage module, reading it from the storage module, and presenting it on the display.

By storing only a group of data items, i.e. typically the items most frequently used by the user, the limited memory capacity of the storage module is sufficient to store a high percentage of the data items needed by the user. Only when the user requests a data item not belonging to the group of data items stored in the storage module, the item has to be received from the service provider through the broadcast and it will therefore be presented on the display with a certain delay. Thus, the limited memory capacity of the storage module has virtually been extended to the size of the memory used by the service provider.

In an embodiment of the invention, which is stated in claim 2, the data items represent positions in a database at the service provider, and the positions of the database are broadcasted consecutively in a cyclical order. A requested data item not belonging to the group is received when broadcasted through the at least one base station in its cyclical order. This has the advantage that the memory in each mobile station is continously updated, and that a data item not belonging to the group stored in the storage module, when requested by the user, will be received automatically after a short time.

Alternatively, as stated in claim 3, an inquiry for the requested data item is sent to the service provider through the at least one base station, and the requested data item is subsequently broadcasted through the at least one base station. This embodiment will have a shorter delay before a requested data item is delivered to the mobile station.

When, as stated in claim 4, another data item previously belonging to the group is deleted from the storage module, when a requested data item not belonging to the group is received and stored in the storage module, the group may continously be maintained at the same size.

As mentioned, the invention further relates to a mobile station for receiving data items from a service provider through at least one base station, said mobile station comprising a display for presenting data items to a user, a storage module and means for storing received data items in the storage module for subsequent presentation on the display, and a user interface and means for receiving from said user interface a request for presentation of a specific data item. When the mobile station is adapted to store only a group of data items comprising some of the received data items in the storage module; read, if the requested data item belongs to said group, the data item from the storage module, and present it on the display; and receive, if the requested data item does not belong to said group, the data item from said service provider, store it in the storage module, read it from the storage module, and present it on the display, a mobile station suited for the above-mentioned method is provided.

A further improvement is achieved when, as stated in claim 6, the storage module is removable. This allows the module to be changed between mobile stations, and thus any mobile station compatible with the storage module can be used for receiving the data items. In an expedient embodiment, which is stated in claim 7, the mobile station is a GSM cellular telephone and the storage module is a SIM card (Subscriber Identity Module). As stated in claim 8, the GSM cellular telephone may support WAP, in which case WAP may be used for e.g. an initial negotiation dialog.

As stated in claim 9, the data items may be broadcasted in a Cell Broadcast service, as this service is well suited for getting the samme information to several mobile stations at the same time.

As mentioned, the invention further relates to a storage module for use in a mobile station adapted to receive data items from a service provider through at least one base station, said storage module comprising means for storing received data items in the storage module, and means for receiving a request for a specific data item. When the storage module is adapted to store only a group of data items comprising some of the received data items; read, if the requested data item belongs to said group, the data item from the storage module; and receive, if the requested data item does not belong to said group, the data item from said service provider, store it in the storage module, and read it from the storage module, a storage module suited for the above-mentioned method is provided.

A further improvement is achieved when, as stated in claim 11, the storage module is removable. This allows the module to be changed between mobile stations, and thus any mobile station compatible with the storage module can be used for receiving the data items. In an expedient embodiment, which is stated in claim 12, the storage module is a SIM card (Subscriber Identity Module) for use in a GSM cellular telephone or a CDMA cellular telephone.

The invention will now be described more fully below with reference to the drawing, in which
figure 1 shows a network in which the invention may be used,
figure 2 shows a mobile terminal for use in the invention, and
figure 3 shows the mapping of memory according to the invention.

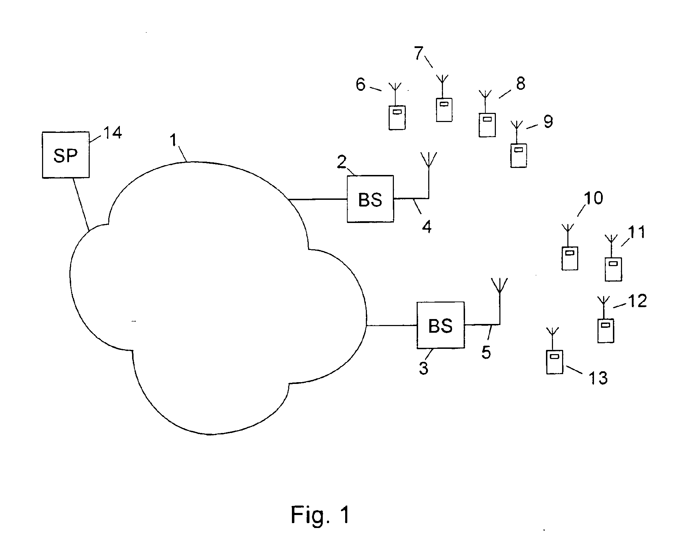

Figure 1 shows a network 1 in which the invention may be used. The network could be a cellular telephone system, which may e.g. be a GSM system, comprising two base stations 2 and 3. Further, the network may comprise a number of network elements (not shown) that may be base stations of the same type, or they may be other types of network elements well known in telecommunications networks. The base stations 2, 3 are provided with antennas 4, 5 by means of which they communicate with a number of mobile stations 6, 7, 8, 9, 10, 11, 12 and 13 such as cellular telephones.

Normally, a base station communicates on a two-way basis with each mobile station within its cell individually. This is the case e.g. when one of the cellular telephones is used for a telephone conversation with another telephone (mobile or not) somewhere else in the network.

Although the network is mainly used for individual communication with the mobile stations it may also be used in connection with a so-called Cell Broadcast service, which means that a base station broadcasts a common message which may be received by any mobile station within its cell simultaneously. This service is mainly used for text messages which are intended to be presented on a display of the telephones. This service enables the network operator to send a common message to all mobile stations at the same time. Messages of this type may be from the network operator himself or they may be sent on behalf of an external service provider. Figure 1 shows such a service provider 14 connected to the network. Examples of information from a service provider could be football results or other sports scores sent during an ongoing game, stock exchange rates, weather reports, traffic information and airline schedules.

The network may also be used for the transmission of SMS (Short Message Service) messages. These are also text messages and they may be sent either to a mobile station or from a mobile station. A common text message intended for several mobile stations may also be sent as an SMS message, but then it must be sent to each mobile station individually, one after the other. However, if the information is sent to a large number of mobile stations it will take a long time before they have all received it.

In the described embodiment Cell Broadcast is used for the transmission of common messages from the service provider 14 to a number of the mobile stations 6-13, while SMS is used for two-way communication between the service provider and individual mobile stations during a service dialogue, which may typically take place when a new subscriber is connected to the service, or when a subscriber wants some changes to the subscription.

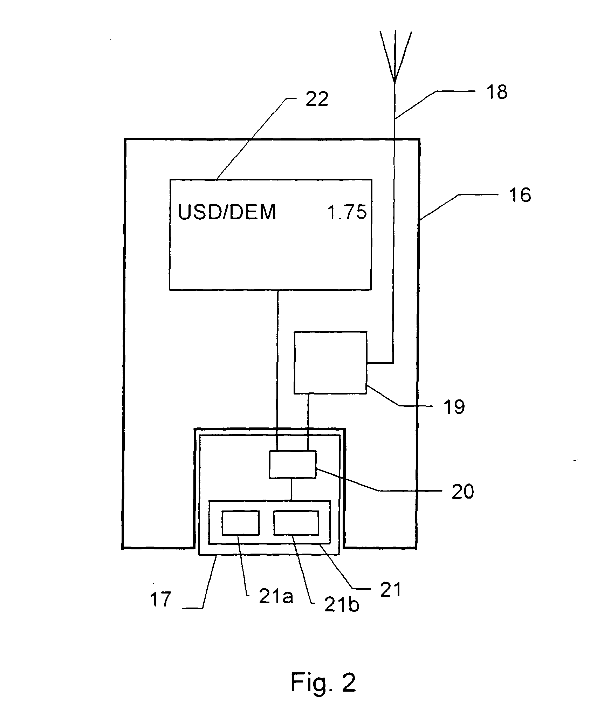

Figure 2 shows an example of a mobile terminal 16 which may be used according to the invention. The mobile terminal could be a normal GSM telephone and as can be seen, the telephone is connected to a removable SIM card (Subscriber Identity Module), which will be described in further detail below. The telephone 16 further comprises a transmit/receive aerial 18, a transmit/receive circuit 19 and a display 22 on which text messages may be displayed for the user.

The SIM card 17 connected to the telephone 16 comprises a processor or control circuit 20 and a memory 21. The memory 21 is divided into two sections, i.e. a mask-programmed ROM 21a containing the SIM operating system and other program code that will be described in further detail, and a RAM and/or EEPROM 21b for storage of data items and for use by the processor circuit 20 during operation.

When data items in the form of text messages are received from a service provider of a value added service, they are received by the aerial 18 and routed through the circuit 19 to the SIM card 17 on which the processor circuit 20 stores the data item in the memory 21b. Subsequently, the data items stored in the memory may be displayed on the display 22. Normally, a specific data item is requested by the user by means of a keypad (not shown), and the requested data item (provided it is actually stored in the memory 21b) is fetched from the memory by the processor circuit 20 and transferred to the display 22. In figure 2 an example of a financial information, i.e. an exchange rate, is shown.

According to the invention the data items distributed from the service provider 14 and transmitted as cell broadcast to the mobile stations are transmitted in a compressed format. The types of compression used are well known and described in the art and, thus, it will not be described in further detail here. For instance, in case of financial information certain specialized compression algorithms take advantage of the highly ordered nature of the input information. In case of free text information, different types of compression algorithms, e.g. of the Hufmann or LZW class, are more efficient and suitable.

In the receiver end a corresponding decompression application is embedded and applied on the SIM card 17. The decompression algorithm is embedded as instructions in the ROM memory 21a, such that the processor circuit 20 is able to perform the decompression function. Several different decompression algorithms corresponding to the above-mentioned may be embedded, thus allowing for the free use of these by the service provider. The advantage of this approach is the ability to separately apply two or more different kinds of data compression/decompression adapted to and optimized for different types of data. Embedding the decompression application on the SIM card 17 means that a user wanting the value added service of a service provider must buy a special SIM card with the corresponding decompression application embedded, but this cost is much less than the cost of a specialized terminal needed in prior art solutions.

After decompression, the expanded value added service data are routed to the display of the receiver and/or to the appropriate memory locations on the SIM card. As a result of transmitting the data in a compressed format and decompressing on the SIM card is a significant reduction in transmission volume and the costs to the mobile phone network operator(s) and/or to the end-users of value added services.

The SIM card will typically have access to read and receive several incoming data channel subsets of the general operating standard to which it belongs. E.g. a GSM receiver incorporates separately dedicated data channels (Cell Broadcast, SMS and GSM data), which may all be routed through and read by the SIM card. In the prior art, all SMS services are thus routed through the SIM card to the appropriate SIM card memory locations and to the display of the receiver without the ability to apply any data decompression. When the general data decompression module is embedded and used on the SIM card, this may be applied to any incoming value added services on any data channel, provided only that this data channel, e.g. SMS, is accessible for post reception processing in the SIM card by the general data decompression module, which is also embedded in the SIM card.

Normally, the data items are sent in data strings, and the compressed data strings may be prefixed with unique flag(s) or a Message Identifier Data (MID) unequivocally identifying the data string or message type and the specifically appropriate decompression algorithm to be used upon reception and routing to the SIM card application. E.g. in the case of Cell Broadcast on GSM phones this is accomplished by the uniquely identifiable Cell Broadcast Message Identifier (CBMID) as defined in the GSM standard, which prefixes the compressed data string. A standard data input interface as well as data output interface to the appropriate memory locations allows the interchangeable application of different types of decompression if necessary. Having read the unequivocal data string or message flag or header, the data decompression module embedded in the SIM card subsequently decompresses the incoming data stream as invoked by this particular flag or message identifier (MID).

The received data items may also, as an alternative, be stored on the SIM card in the compressed form in order to save memory capacity. They are then decompressed when they are fetched from the memory for display on the display of the terminal. Another and very efficient way of saving memory capacity on the SIM card is described below. this is needed because many value added services require memory capacity much in excess of what is available on the SIM card.

In the current art of SIM card Memory Management the SIM cards include a general Menu Function found in the SIM card Tool Kit Application, (STA). This menu function shows the user which functionalities and value added services are available, e.g. routed to and stored in the SIM card, in the case of a value added service. While the SIM card menu function is thus to some extent "aware" of the underlying SIM card memory organisation, it does not partake in any actual underlying memory management apart from simple storing and retrieving tasks within the given physical memory of the SIM card. As the memory of the SIM card is quite limited this presents a serious limitation to the number and "depth" of value added services, which can be maintained by the SIM card memory without memory overflow.

According to the invention, a dynamic application is embedded in a SIM card, which is aware of and able to configure a part of the SIM card memory reserved for value added services support. The application treats the actually available (physical as opposed to virtual) SIM memory as a "cache like" application. Mostly, or often, data requests from the user will be repetitive. In the case of financial information the user is likely to request the same stock price(s) several consecutive times before altering his request. The strategy of the cache like memory application seeks to benefit statistically from this behaviour by directly making available in the physical SIM card memory the data requested. Logically, this is achieved by linking or "mapping" the logical address of the large, or unlimited, virtual memory with a corresponding address in the physical SIM card memory. The large virtual memory corresponds to a physical memory which is present at the service provider.

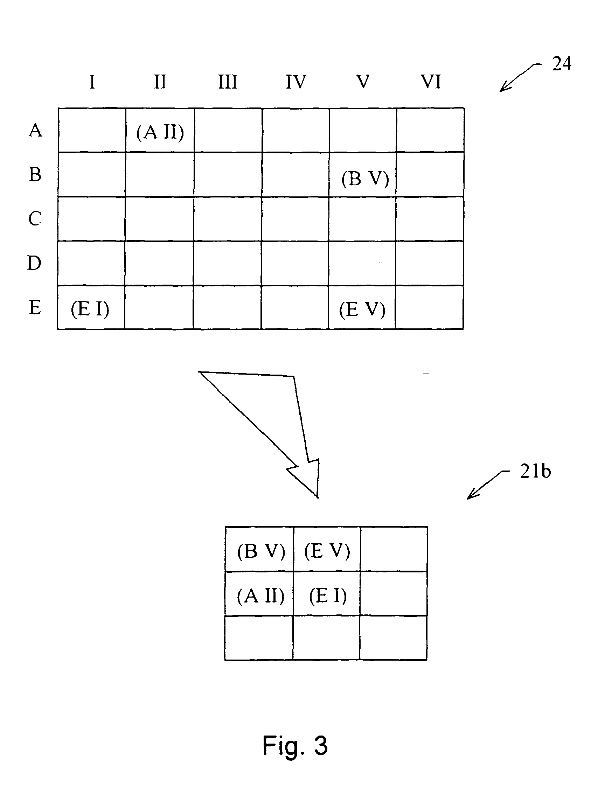

This process of mapping is illustrated in figure 3. The large virtual memory is shown as the memory 24 at the service provider. For the purpose of illustration this memory is here shown as having 30 memory locations, of which the rows are labelled A, B, C, D and E, and the columns labelled I, II, III, IV, V and VI. Each memory locution corresponds to a data item and is labelled by its row and column, e.g. (A II). In the reality there are many more locations, typically several thousands. The physical memory 21b of a mobile terminal can accommodate only a fraction of these data items. In the example, the memory locations (B V), (E V), (A II) and (E I) of the large virtual memory are stored in the memory 21b. The reason for selecting these four items may be that the user subscribes to only these four items, or they may be the four most recently used by the user. In the memory 21b of other mobile terminals, different memory locations will typically be stored.

When the user of a terminal requests one of those items stored in the memory 21b of his terminal, the item will be fetched from the memory and displayed on the display immediately. Sometimes, data will be requested by the user corresponding to data addresses "outside" the current contents of the physical memory 21b. This elicits an automatic data request and "fill-up" dialogue with the service provider, which is invisible to the user. The freshly filled up data location is then mapped and copied to the physical memory. If the memory is already full, then another item will be remapped to the virtual memory and deleted from the physical memory (First In First Out Principle) to make room for the mapping to physical memory of the new request.

Alternatively, all the data items of the large virtual memory 24 are transmitted cyclically, such that each data item in the individual mobile terminals are all updated at the same rate in sampled real-time, typically every minute. This means that the four items (B V), (E V), (A II) and (E I) stored in the memory 21b will be updated at this rate. When a data item corresponding to data addresses outside the current contents of the physical memory is requested, the new data item is read next time it is updated, and subsequently stored in the physical memory and displayed for the user.

The invention allows the service provider and/or the network operator to accurately allocate to each value added service a specific memory array (set of coordinates) location, e.g. "Sports in memory array L1 - 025, Financial Information, type "Stock Market" in memory array A1 - K 80" and so on. This is advantageous in particular for the network operator(s) who wish(es) to efficiently pack as large an offering of value added services to the networks users/subscribers as possible. In all cases each value added service is represented and selectable via the menu in the display. This menu is established and maintained using the standard SIM Toolkit Application or STA.

Although a preferred embodiment of the present invention has been described and shown, the invention is not restricted to it, but may also be embodied in other ways within the scope of the subject-matter defined in the following claims. As an example, all such mobile phone receivers, which incorporate a Subscriber Identity Module, or so-called SIM card, e.g. mobile phones encompassed by the most common industry standards such as GSM, WAP, GPRS, UMTS and/or CDMA, may be used in connection with the invention.

## Claims

1. A method of transmitting data items from a service provider (14) through at least one base station (2, 3) to a large number of mobile stations (6, 7, 8, 9, 10, 11, 12, 13; 16), a mobile station (16) comprising a storage module (17) for storing data items, a display (22) for presenting data items to a user, and a user interface for receiving requests from a user, the method comprising the steps of:
• broadcasting said data items through the at least one base station (2, 3),
• receiving said data items in the mobile station (16),
• storing received data items in the storage module (17) for subsequent presentation on the display (22), and
• receiving from said user interface a request for presentation of a specific data item,
**characterized in that** the method further comprises the steps of:
• storing only a group of data items consisting of a fraction of the received data items in the storage module (17),
• reading, if a subsequently requested data item belongs to said group, the requested data item from the storage module (17), and presenting it on the display (22), and
• receiving, if a subsequently requested data item does not belong to said group, the requested data item through said broadcast, storing it in the storage module (17), reading it from the storage module (17), and presenting it on the display (22).

2. A method according to claim 1, wherein the data items represent positions in a database at the service provider, **characterized in that** the positions of the database are broadcasted consecutively in a cyclical order, and that a requested data item not belonging to said group is received when broadcasted through the at least one base station (2,3) in its cyclical order.

3. A method according to claim 1, **characterized in that** an inquiry for said requested data item is sent to the service provider through the at least one base station (2, 3), and that the requested data item is subsequently broadcasted through the at least one base station (2, 3).

4. A method according to claims 1-3, **characterized in that** another data item previously belonging to the group is deleted from the storage module (17), when a requested data item not belonging to the group is received and stored in the storage module (17).

5. A mobile station (16) for receiving data items from a service provider (14) through at least one base station (2, 3), said mobile station comprising
• a display (22) for presenting data items to a user,
• a storage module (17) and means for storing received data items in the storage module for subsequent presentation on the display (22), and
• a user interface and means for receiving from said user interface a request for presentation of a specific data item,
**characterized in that** the mobile station is adapted to
• store only a group of data items consisting of a fraction of the received data items in the storage module (17),
• read, if a subsequently requested data item belongs to said group, the data item from the storage module (17), and present it on the display (22), and
• receive, if a subsequently requested data item does not belong to said group, the data item from said service provider (14), store it in the storage module (17), read it from the storage module (17), and present it on the display (22).

6. A mobile station according to claim 5, **characterized in that** said storage module (17) is removable.

7. A mobile station according to claim 6, **characterized in that** it is adapted to be used as a GSM cellular telephone and that the storage module (17) is adapted to be used as a SIM card (Subscriber Identity Module).

8. A mobile station according to claim 7, **characterized in that** the GSM cellular telephone supports WAP.

9. A mobile station according to claims 5-8, **characterized in that** the data items are broadcasted in a Cell Broadcast service.

10. A storage module (17) for use in a mobile station (16) adapted to receive data items from a service provider (14) through at least one base station (2, 3), said storage module (17) comprising
• means for storing received data items in the storage module, and
• means for receiving a request for a specific data item,
**characterized in that** the storage module (17) is adapted to
• store only a group of data items consisting of a fraction of the received data items,
• read, if a subsequently requested data item belongs to said group, the data item from the storage module (17), and
• receive, if a subsequently requested data item does not belong to said group, the data item from said service provider (14), store it in the storage module (17), and read it from the storage module (17).

11. A storage module according to claim 10, **characterized in that** it is removable.

12. A storage module according to claim 11, **characterized in that** it is adapted to be used as a SIM card (Subscriber Identity Module) for use in a GSM cellular telephone or a CDMA cellular telephone.

## Patentansprüche

1. Verfahren zur Übertragung von Datenelementen von einem Dienstanbieter (14) durch mindestens eine Basisstation (2,3) an eine große Anzahl von beweglichen Stationen (6, 7, 8, 9, 10, 11, 12, 13; 16), eine bewegliche Station (16), umfassend ein Speichermodul (17) zum Speichern von Datenelementen, ein Display (22) zur Darstellung von Datenelementen für einen Benutzer und eine Benutzerschnittstelle zum Empfangen von Anforderungen von einem Benutzer, welches Verfahren die Schritte umfasst:
• Senden der Datenelemente durch die mindestens eine Basisstation (2,3),
• Empfangen der Datenelemente in der beweglichen Station (16),
• Speichern von empfangenen Datenelementen im Speichermodul (17) zur nachfolgenden Darstellung auf dem Display (22) und
• Empfangen einer Anforderung einer Darstellung eines spezifischen Datenelements von der Benutzerschnittstelle,
**dadurch gekennzeichnet, dass** das Verfahren außerdem die Schritte umfasst:
• Speichern von nur einer Gruppe von Datenelementen, bestehend aus einem Teil der empfangenen Datenelemente im Speichermodul (17),
• Auslesen des angeforderten Datenelements vom Speichermodul (17), falls ein nachfolgend angefordertes Datenelement zur Gruppe gehört, und Darstellung desselben auf dem Display (22) sowie
• Empfangen des angeforderten Datenelements durch das Senden, falls ein nachfolgend angefordertes Datenelement nicht zur Gruppe gehört, Speichern desselben im Speichermodul (17), Auslesen desselben vom Speichermodul (17) und Darstellung desselben auf dem Display (22).

2. Verfahren nach Anspruch 1, wobei die Datenelemente Positionen in einer Datenbank beim Dienstanbieter darstellen, **dadurch gekennzeichnet, dass** die Positionen der Datenbank nacheinander in einer zyklischen Reihenfolge gesendet werden, und dass ein zur Gruppe nicht gehörendes angefordertes Datenelement empfangen wird, wenn es durch die mindestens eine Basisstation (2,3) in seiner zyklischen Reihenfolge gesendet wird.

3. Verfahren nach Anspruch 1, **dadurch gekennzeichnet, dass** eine Anfrage bezüglich des angeforderten Datenelements durch die mindestens eine Basisstation (2, 3) an den Dienstanbieter gesendet wird, und dass das angeforderte Datenelement nachher durch die mindestens eine Basisstation (2,3) gesendet wird.

4. Verfahren nach den Ansprüchen 1-3, **dadurch gekennzeichnet, dass** ein vorher zur Gruppe gehörendes anderes Datenelement aus dem Speichermodul (17) gelöscht wird, wenn ein zur Gruppe nicht gehörendes angefordertes Datenelement im Speichermodul (17) empfangen und gespeichert wird.

5. Bewegliche Station (16) zum Empfangen von Datenelementen von einem Dienstanbieter (14) durch mindestens eine Basisstation (2,3), welche bewegliche Station
• ein Display (22) zur Darstellung von Datenelementen für einen Benutzer,
• ein Speichermodul (17) und Mittel zum Speichern von empfangenen Datenelementen im Speichermodul zur nachfolgenden Darstellung auf dem Display (22) und
• eine Benutzerschnittstelle und Mittel zum Empfangen einer Anforderung einer Darstellung eines spezifischen Datenelements von der Benutzerschnittstelle umfasst,
**dadurch gekennzeichnet, dass** die bewegliche Station
• zum Speichern von nur einer Gruppe von Datenelementen, bestehend aus einem Teil der empfangenen Datenelemente im Speichermodul (17),
• zum Auslesen des Datenelements vom Speichermodul (17), falls ein nachfolgend angefordertes Datenelement zur Gruppe gehört, und zur Darstellung desselben auf dem Display (22) sowie
• zum Empfangen des Datenelements vom Dienstanbieter (14), falls ein nachfolgend angefordertes Datenelement nicht zur Gruppe gehört, zum Speichern desselben im Speichermodul (17), zum Auslesen desselben vom Speichermodul (17) und zur Darstellung desselben auf dem Display (22) angepasst ist.

6. Bewegliche Station nach Anspruch 5, **dadurch gekennzeichnet, dass** das Speichermodul (17) entfernbar ist.

7. Bewegliche Station nach Anspruch 6, **dadurch gekennzeichnet, dass** sie zur Verwendung als ein zellulares GSM-Telefon angepasst ist, und dass das Speichermodul (17) zur Verwendung als eine SIM-Karte (Teilnehmer-Identität-Modul) angepasst ist.

8. Bewegliche Station nach Anspruch 7, **dadurch gekennzeichnet, dass** das zellulare GSM-Telefon WAP unterstützt.

9. Bewegliche Station nach den Ansprüchen 5-8, **dadurch gekennzeichnet, dass** die Datenelemente in einem Cell Broadcast Service gesendet werden.

10. Speichermodul (17) zur Verwendung in einer beweglichen Station (16), welches zum Empfangen von Datenelementen von einem Dienstanbieter (14) durch mindestens eine Basisstation (2, 3) angepasst ist, welches Speichermodul (17)
• Mittel zum Speichern von empfangenen Datenelementen im Speichermodul und
• Mittel zum Empfangen einer Anforderung eines spezifischen Datenelements umfasst,
**dadurch gekennzeichnet, dass** das Speichermodul (17)
• zum Speichern von nur einer Gruppe von Datenelementen, bestehend aus einem Teil der empfangenen Datenelemente,
• zum Auslesen des Datenelements vom Speichermodul (17), falls ein nachfolgend angefordertes Datenelement zur Gruppe gehört, und
• zum Empfangen des Datenelements vom Dienstanbieter (14), falls ein nachfolgend angefordertes Datenelement nicht zur Gruppe gehört, zum Speichern desselben im Speichermodul (17) und zum Auslesen desselben vom Speichermodul (17) angepasst ist.

11. Speichermodul nach Anspruch 10, **dadurch gekennzeichnet, dass** es entfernbar ist.

12. Speichermodul nach Anspruch 11, **dadurch gekennzeichnet, dass** es zur Verwendung als eine SIM-Karte (Teilnehmer-Identität-Modul) zum Gebrauch in einem zellularen GSM-Telefon oder einem zellularen CDMA-Telefon angepasst ist.

## Revendications

1. Procédé de transmission d'éléments de données d'un prestataire de services (14) par au moins une station de base (2, 3) à un grand nombre de stations mobiles (6, 7, 8, 9, 10, 11, 12, 13 ; 16), une station mobile (16) comprenant un module de mémorisation (17) pour le stockage d'éléments de données, un affichage (22) pour la présentation d'éléments de données à un utilisateur, et une interface d'utilisateur pour la réception des requêtes d'un utilisateur, le procédé comprenant les étapes de :
• radiodiffusion desdits éléments de données par au moins une station de base (2, 3),
• réception desdits éléments de données dans la station mobile (16),
• stockage d'éléments de données reçus dans le module de mémorisation (17) pour la présentation ultérieure sur l'affichage (22), et
• réception de ladite interface d'utilisateur d'une requête pour la présentation d'un élément de données spécifique,
**caractérisé en ce que** le procédé en outre comprend les étapes de :
• stockage seulement d'un groupe d'éléments de données composé d'une fraction des éléments de données reçus dans le module de mémorisation (17),
• lecture, si un élément de données requis ultérieurement appartient audit groupe, de l'élément de données requis du module de mémorisation (17), et présentation de celui-ci sur l'affichage (22), et
• réception, si un élément de données requis ultérieurement n'appartient pas audit groupe, de l'élément de données requis par ladite radiodiffusion, stockage de celui-ci dans le module de mémorisation (17), lecture de celui-ci depuis le module de mémorisation (17), et présentation de celui-ci sur l'affichage (22).

2. Procédé selon la revendication 1, dans lequel les éléments de données représentent des positions dans une base de données au prestataire de service, **caractérisé en ce que** les positions de la base de données sont radiodiffusées consécutivement dans un ordre cyclique, et qu'un élément de données requis n'appartenant pas audit groupe est reçu une fois radiodiffusé par l'au moins une station de base (2, 3) dans son ordre cyclique.

3. Procédé selon la revendication 1, **caractérisé en ce qu'**une enquête pour ledit élément de données requis est orientée au prestataire de service par l'au moins une station de base (2, 3), et que l'élément de données requis est ultérieurement radiodiffusé par l'au moins une station de base (2, 3).

4. Procédé selon les revendications 1 à 3, **caractérisé en ce qu'**un autre élément de données appartenant précédemment au groupe est supprimé du module de mémorisation (17), lorsqu'un élément de données requis n'appartenant pas au groupe est reçu et stocké dans le module de mémorisation (17).

5. Station mobile (16) pour la réception d'éléments de données depuis un prestataire de service (14) par au moins une station de base (2, 3), ladite station mobile comprenant
• un affichage (22) pour la présentation d'éléments de données à un utilisateur,
• un module de mémorisation (17) et des moyens pour le stockage d'éléments de données reçus dans le module de mémorisation pour la présentation ultérieure sur l'affichage (22), et
• une interface d'utilisateur et des moyens pour la réception de ladite interface d'utilisateur d'une requête pour la présentation d'un élément de données spécifique,
**caractérisée en ce que** la station mobile est adaptée à
• stockage seulement d'un groupe d'éléments de données composé d'une fraction des éléments de données reçus dans le module de mémorisation (17),
• lecture, si un élément de données requis ultérieurement appartient audit groupe, de l'élément de données requis du module de mémorisation (17), et présentation de celui-ci sur l'affichage (22), et
• réception, si un élément de données requis ultérieurement n'appartient pas audit groupe, de l'élément de données dudit prestataire de service (14), stockage de celui-ci dans le module de mémorisation (17), lecture de celui-ci du module de mémorisation (17), et présentation de celui-ci sur l'affichage (22).

6. Station mobile selon la revendication 5, **caractérisée en ce que** ledit module de mémorisation (17) est amovible.

7. Station mobile selon la revendication 6, **caractérisée en ce qu'**elle est adaptée à l'usage en tant qu'un téléphone cellulaire de GSM, et que le module de mémorisation (17) est adapté à l'usage en tant qu'une carte de SIM (module d'identité d'abonné).

8. Station mobile selon la revendication 7, **caractérisée en ce que** le téléphone cellulaire de GSM supporte le WAP.

9. Station mobile selon les revendications 5 à 8, **caractérisée en ce que** les éléments de données sont radiodiffusés dans un service de radiodiffusion de cellule.

10. Module de mémorisation (17) pour l'usage dans une station mobile (16) adapté à recevoir des éléments de données depuis un prestataire de service (14) par au moins une station de base (2,3), ledit module de mémorisation (17) comprenant
des moyens pour le stockage des éléments de données reçus dans le module de mémorisation, et
des moyens pour la réception d'une requête pour un élément de données spécifique,
**caractérisé en ce que** le module de mémorisation (17) est adapté à
• stockage seulement d'un groupe d'éléments de données composé d'une fraction des éléments de données reçus,
• lecture, si un élément de données requis ultérieurement appartient audit groupe, de l'élément de données du module de mémorisation (17), et
• réception, si un élément de données requis ultérieurement n'appartient pas audit groupe, de l'élément de données dudit prestataire de service (14), stockage de celui-ci dans le module de mémorisation (17), et lecture de celui-ci du module de mémorisation (17).

11. Module de mémorisation selon la revendication 10, **caractérisé en ce qu'**il est amovible,

12. Module de mémorisation selon la revendication 11, **caractérisé en ce qu'**il est adapté à l'usage en tant qu'une carte de SIM (module d'identité d'abonné) pour l'usage dans un téléphone cellulaire de GSM ou un téléphone cellulaire de CDMA.
